# EUROPEAN PATENT SPECIFICATION

(11) **EP 4 016 882 B1**
(45) Date of publication and mention of the grant of the patent: **17.09.2025**
(21) Application number: 20855067.3
(22) Date of filing: 03.08.2020
(51) Int. Cl.: H04J 14/02, H04Q 11/00

(54) **WAVELENGTH DIVISION MULTIPLEXING SYSTEM, LOCAL APPARATUS, AND REMOTE APPARATUS**
WELLENLÄNGENMULTIPLEXSYSTEM, LOKALES GERÄT UND ENTFERNTES GERÄT
SYSTÈME DE MULTIPLEXAGE PAR RÉPARTITION EN LONGUEUR D'ONDE, APPAREIL LOCAL ET APPAREIL DISTANT

(30) Priority: 16.08.2019 CN 201910756834
(43) Date of publication of application: 22.06.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Han, Beijing 100032 (CN); ZHANG, Dechao, Beijing 100032 (CN); WANG, Dong, Beijing 100032 (CN); LI, Yunbo, Beijing 100032 (CN); CAI, Qian, Beijing 100032 (CN); ZHAO, Yang, Beijing 100032 (CN); HAN, Liuyan, Beijing 100032 (CN); ZHOU, Enbo, Beijing 100032 (CN)
(74) Representative: GPI Brevets
(86) International application number: PCT/CN2020/106568
(87) International publication number: WO 2021/031832

(56) References cited:
- EP-A2- 0 991 217
- CN-A- 1 906 876
- CN-A- 104 902 351
- CN-A- 108 600 872
- CN-A- 111 314 014
- CN-U- 211 180 309
- CN-U- 211 426 853
- US-A- 5 589 969
- US-A1- 2005 220 397
- KENG-DUAN CHANG ET AL: "Determination of FWM Products in Unequal-Spaced-Channel WDM Lightwave Systems", JOURNAL OF LIGHTWAVE TECHNOLOGY, IEEE, USA, vol. 18, no. 12, 1 December 2000 (2000-12-01), XP011029826, ISSN: 0733-8724

## Description

### TECHNICAL FIELD

The present disclosure relates to the field of communication technology, in particular to a Wavelength Division Multiplexing (WDM) system, an equipment at central office and an equipment at remote side.

### BACKGROUND

Along with the emerging issues such as an increase in construction and maintenance costs of a computer room, an important architecture change will occur for a 5^{th}-Generation (5G) fronthaul network, and a Cloud-Radio Access Network (C-RAN) is expected to become a mainstream networking mode for the future 5G fronthaul network. Currently, in the C-RAN based on centralized processing, an individual Distributed Unit (DU) in the computer room is connected to 5 to 10 physical base stations. Considering that one physical base station corresponds to three Active Antenna Units (AAUs) and each AAU is provided with two 25G optical modules at a spectrum of 160M, a 120-core optical fiber needs to be provided for 10 physical base stations in the case of a two-fiber bidirectional optical fiber direct-drive scheme, which has presented a huge challenge to an optical fiber resources of the fronthaul network.

In order to significantly reduce the optical fiber resources, a WDM technology is proposed, and several optical signals at different wavelengths are multiplexed and transmitted in a same core optical fiber. For example, for an S 111 physical base station, when a single-fiber bidirectional WDM technology is adopted, the required quantity of optical fibers is reduced from 12 cores to merely 1 core. At this time, 12 25G WDM channels at different wavelengths are required. Currently, there mainly exist three WDM schemes, i.e., Dense Wavelength Division Multiplexing (DWDM), Coarse Wavelength Division Multiplexing (CWDM), and Local Area Network Wavelength Division Multiplexing (LAN-WDM).

A band range for the DWDM covers a conventional band, i.e., C band, and a long band, i.e., L band, with an integral multiple of 12.5GHz as a channel spacing. Currently, a commonly-used DWDM is mainly based on C-band 50GHz and 100GHz 80-wavelength or 40-wavelength channels.

The CWDM has a band range from 1271nm to 1611nm, it totally includes 18 channels at different wavelengths with a channel spacing of 20nm between adjacent channels.

The LAN-WDM has a band range covering 1273.54nm to 1286.66nm and 1295.56nm to 1309.14nm in an original band, i.e., O band, and it totally includes 8 channels at different wavelengths with a channel spacing of 800GHz.

Currently, it is impossible for the above three WDM schemes to meet the requirement on the low-cost 10km transmission for a 12-wavelength 25G system in the 5G fronthaul network.

US2005/220397A1 relates to technology for adding optical signals in a coarse wavelength division multiplexing system.

US5589969A relates to a wavelength division multiplexed optical fiber transmission equipment which is capable of increasing the transmission capacity of an optical fiber transmission system by suppressing interference between codes caused by four-wave mixing.

KENG-DUAN CHANG ET AL: "Determination of FWM Products in Unequal-Spaced-Channel WDM Lightwave Systems", JOURNAL OF LIGHTWAVE TECHNOLOGY, IEEE, USA, vol. 18, no. 12, 1 December 2000 (2000-12-01), XP011029826, ISSN: 0733-8724) relates to algorithms that can determine the total numbers of FWM signals falling onto the operating band and each channel, respectively, of unequal-spaced WDM systems.

### SUMMARY

An object of the present disclosure is to provide a WDM system, an equipment at central office and an equipment at remote side, so as to solve the problem that it is impossible for the related WDM technology to meet a system requirement on the 5G fronthaul network. The invention is set out in the appended set of claims.

According to the embodiments of the present disclosure, the optical modules having wavelength channels with different spacings and the WDM multiplexer/demultiplexer having wavelength channels with a same spacing are adopted, and the central wavelengths of the optical modules are determined by adjusting and shifting the equal-spacing central wavelengths. As a result, it is able to rapidly meet the system requirement on a 5G fronthaul network.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig. 1 is a schematic view showing a WDM system according to an embodiment of the present disclosure;
Fig. 2 is a schematic view showing the distribution of central wavelengths of light from optical modules according to an embodiment of the present disclosure;
Fig. 3a is a schematic view showing an application scenario according to an embodiment of the present disclosure;
Fig. 3b is another schematic view showing the application scenario according to an embodiment of the present disclosure; and
Fig. 3c is yet another schematic view showing the application scenario according to an embodiment of the present disclosure.

### DETAILED DESCRIPTION

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure. The present invention is defined by the attached independent claims. Advantageous embodiments are described in the attached dependent claims. Embodiments and/or examples mentioned in the description that do not fall under the scope of the claims are useful for understanding the present invention.

Such expressions as "illustrative" and "for example" are merely used to show examples or explanations. Any illustrative embodiment or scheme in the present disclosure shall not be construed as being superior over the other embodiment or scheme. Definitely, these words intend to exhibit relevant concepts in a concrete manner.

In the related art, for a DWDM technology, a 10G DWDM optical module and a WDM multiplexer/demultiplexer (M-D) have been applied to a 10G OTN, so as to support the transmission of a 40-wavelength signal with a channel spacing of 50GHz and an 80-wavelength signal with a channel spacing of 100GH in a C band. However, a 25G DWDM optical device is still in small-batch production. Due to a small channel spacing, the 25G DWDM optical module needs to be controlled by a precise Thermo Electric Cooler (TEC). Due to a dispersion penalty in the C band, an EML also needs to be adopted. In this regard, a system cost increases significantly.

For a CWDM technology, 25G optical modules at a wavelength of 1271nm, 1291nm, 1311nm or 1331nm have been widely applied to such a scenario as data center 100GE. 25G optical modules at a wavelength of 1351nm or 1371nm have been provided in small batch. Due to a dispersion effect of the optical fiber, the EML needs to be adopted by 6-wavelength 25G CWDM optical modules at wavelengths of 1471nm to 1571nm, so the manufacture cost increases significantly to be approximately equal to the cost of the DWDM optical module. There is currently no CWDM product for the other bands.

For an LAN-WDM technology, 8 wavelength channels are all located within an O band, so there is an advantage that the dispersion penalty is small. However, currently most of the 25G LAN-WDM optical modules include the EML, so the manufacture cost is relatively high. In addition, the LAN-WDM merely supports 8 wavelengths, so it is impossible to meet the requirement on 12 wavelengths for a 5G fronthaul network.

For the above reasons, currently there is an urgent need to provide a WDM scheme with a low manufacture cost and capable of meeting the requirement on the 5G fronthaul network.

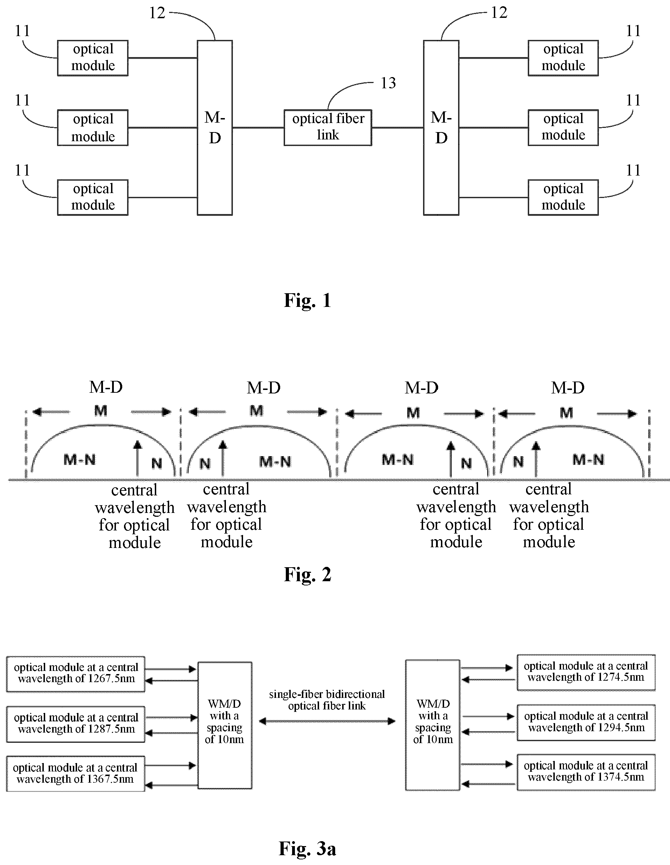

As shown in Fig. 1, the present disclosure provides in some embodiments a WDM system 10, which includes optical modules, and a pair of WDM multiplexer/demultiplexer. The plurality of optical modules are connected to the respective two WDM multiplexer/demultiplexer 12, the pair of WDM multiplexer/demultiplexer are connected to each other through an optical fiber link 13.

In the embodiments of the present disclosure, the optical fiber link 13 may be a single-fiber unidirectional optical fiber link or a single-fiber bidirectional optical fiber link, i.e., the WDM system 10 may be a single-fiber unidirectional WDM system or a single-fiber bidirectional WDM system.

The optical module 11 is configured to perform conversion between an electric signal and an optical signal using a photovoltaic conversion method in the related art, which will not be particularly defined herein.

The WDM multiplexer/demultiplexer 12 may receive a plurality of optical signals at different wavelengths from the optical module 11 and multiplex the optical signals. In addition, the WDM multiplexer/demultiplexer 12 may demultiplex the multiplexed optical signal and transmit the optical signals at different wavelengths to a corresponding optical module 11. The WDM multiplexer/demultiplexer 12 may include a multiplexer and a demultiplexer formed integrally or formed in a separated manner, which will not be particularly defined herein.

The WDM multiplexer/demultiplexer 12 may be a thin film filer or an Arrayed Waveguide Grating (AWG), and a specific type of the WDM multiplexer/demultiplexer 12 will not be particularly defined herein.

It should be appreciated that, Fig. 1 merely shows a scenario where the WDM multiplexer/demultiplexer 12 is connected to three optical modules 11. In actual use, the quantity of optical modules 11 may be adjusted according to the practical need. The quantity of optical modules 11 connected to the WDM multiplexer/demultiplexer 12 will not be particularly defined herein.

In the embodiments of the present disclosure, spacings between central wavelengths of channels for the WDM multiplexer/demultiplexer 12 are equal; spacings between central wavelengths of transmitting optical signals for the optical modules 11 located at adjacent wavelength channels are unequal; spacings between the central wavelengths of the transmitting optical signals for the optical modules 11 located at odd wavelength channels are equal; spacings between the central wavelengths of the transmitting optical signals for the optical modules 11 located at even wavelength channels are equal. In other words, the optical modules 11 having wavelength channels with different spacings and the WDM multiplexer/demultiplexer 12 having wavelength channels with a same spacing are adopted in the WDM system 10.

The central wavelengths of the plurality of optical modules 11 are determined by adjusting and shifting the equal-spacing central wavelengths, respectively. For example, on the basis of first 6 wavelengths in the CWDM technology, i.e., 1271nm to 1371nm, the central wavelengths of the optical modules are shifted to the left and right by 3.5nm, so as to obtain 12 central wavelengths with different spacings for the WDM system, thereby to meet the requirement on the 12 wavelengths for a 5G fronthaul network.

In a possible embodiment of the present disclosure, a laser of the optical module 11 is a DML or an EML.

In a scenario where first 6 wavelengths in the CWDM system are adjusted and shifted to obtain a central wavelength of 12 wavelengths with unequal spacings in the WDM system, the 12 wavelengths are all implemented through the DML with a low cost, so it is able to effectively reduce the overall cost of the system.

To be specific, Fig. 2 shows the distribution of the central wavelengths of the optical module 11 in the wavelength channels.

The central wavelengths of the light beams transmitted by the optical modules 11 in adjacent wavelength channels are symmetric about a boundary between adjacent channels for the WDM multiplexer/demultiplexer 12.

Further, the spacing between the central wavelengths of the transmitting optical signals for the optical modules located at the odd wavelength channels is 2M; the spacing between the central wavelengths of the transmitting optical signals for the optical modules located at the even wavelength channels is 2M; the spacing between the central wavelengths of the transmitting optical signals for the optical modules located at adjacent odd wavelength channel and even wavelength channel is 2N or 2(M-N), wherein M represents the channel spacing of the WDM multiplexer/demultiplexer 12, and N represents the adjusting and shifting value of the central wavelengths of the transmitting optical signals for the optical modules 11.

In some embodiments of the present disclosure, the channel bandwidths of each channels for the WDM multiplexer/demultiplexer 12 are less than or equal to M, i.e., the channel bandwidth of the WDM multiplexer/demultiplexer 12 is set to be less than or equal to the channel spacing. The center of the channel bandwidth is located at the same or different point with the center of the channel, i.e., the center of the channel bandwidth is not limited to be the center of the channel spacing, so that the central wavelengths of the adjacent channels for the WDM multiplexer/demultiplexer have different spacings.

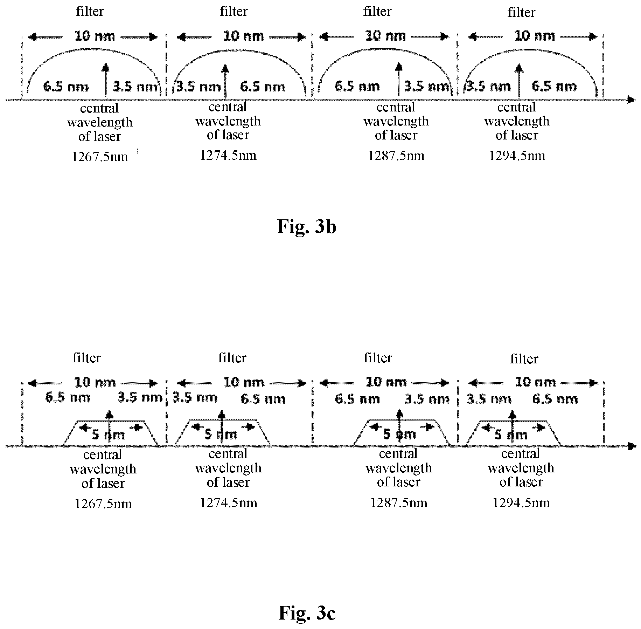

For example, as shown in Fig. 3b, each channel of the WDM multiplexer/demultiplexer 12 has a channel bandwidth of 10nm (indicated by an arc in Fig. 3b), which equals to the channel spacing M of the WDM multiplexer/demultiplexer. A center of each channel bandwidth is the same as a center of a corresponding channel.

For another example, as shown in Fig. 3c, each channel of the WDM multiplexer/demultiplexer 12 has a channel bandwidth of 5nm (indicated by a trapezoid in Fig. 3c), which is small than the channel spacing M of the WDM multiplexer/demultiplexer 12. A center of each channel bandwidth is different from a center of a corresponding channel.

Based on the above, it is able to increase a wave number of the optical module in the WDM system. In addition, the central wavelength of the light from each optical module has a corresponding wavelength channel, so it is able to meet the system requirement on the 5G fronthaul network.

In the embodiments of the present disclosure, the optical modules having the wavelength channels with different spacings and the WDM multiplexer/demultiplexer having the wavelength channels with a same spacing are adopted, so it is able to meet the system requirement on the 5G fronthaul network.

In the WDM system 10 in Fig. 1, two signal interaction ends are a central office end and a remote end. A signal may be transmitted from the central office end to the remote end, or from the remote end to the central office end.

The present disclosure further provides in some embodiments an equipment at central office, which includes optical modules and a WDM multiplexer/demultiplexer. The optical modules are connected to the WDM multiplexer/demultiplexer, respectively.

In the embodiments of the present disclosure, the description about the optical modules and the WDM multiplexer/demultiplexer may refer to that about the optical module 11 and the WDM multiplexer/demultiplexer 12 in the WDM system 10 in Fig. 1, and thus will not be particularly defined herein.

Spacings between central wavelengths of channels for the WDM multiplexer/demultiplexer are equal; spacings between central wavelengths of transmitting optical signals for the optical modules located at adjacent wavelength channels are unequal; spacings between the central wavelengths of the transmitting optical signals for the optical modules located at odd wavelength channels are equal; spacings between the central wavelengths of the transmitting optical signals for the optical modules located at even wavelength channels are equal.

In a possible embodiment of the present disclosure, the central wavelengths of the optical modules are determined by adjusting and shifting the equal-spacing central wavelengths, respectively.

The distribution of the central wavelengths of the transmitting optical signals for the optical modules may refer to the relevant description in Fig. 2. A spacing between the central wavelength of the transmitting optical signals for the optical modules and the boundary of the adjacent channels of the WDM multiplexer/demultiplexer is N or (M-N), where M represents the channel spacing of the WDM multiplexer/demultiplexer, and N represents the adjusting and shifting value of the central wavelengths of the transmitting optical signals for the optical modules.

In a possible embodiment of the present disclosure, a laser in the optical module is a DML or an EML.

In some embodiments of the present disclosure, each optical module of the equipment at central office is deployed in an OTN or WDM equipment.

It should be appreciated that, the WDM multiplexer/demultiplexer of the equipment at central office may be arranged in the OTN or WDM equipment together with the optical modules, or arranged at another position and connected to the optical modules through an optical fiber.

The present disclosure further provides in some embodiments an equipment at remote side, which includes optical modules and a WDM multiplexer/demultiplexer. The plurality of optical modules is connected to the WDM multiplexer/demultiplexer.

In the embodiments of the present disclosure, the description about the optical modules and the WDM multiplexer/demultiplexer may refer to that about the optical modules 11 and the WDM multiplexer/demultiplexer 12 in the WDM system 10 in Fig. 1, and thus will not be particularly defined herein.

Spacings between central wavelengths of channels for the WDM multiplexer/demultiplexer are equal; spacings between central wavelengths of transmitting optical signals for the optical modules located at adjacent wavelength channels are unequal; spacings between the central wavelengths of the transmitting optical signals for the optical modules located at odd wavelength channels are equal; spacings between the central wavelengths of the transmitting optical signals for the optical modules located at even wavelength channels are equal.

In a possible embodiment of the present disclosure, the central wavelengths of the optical modules are determined by adjusting and shifting the equal-spacing central wavelengths, respectively.

The distribution of the central wavelengths of the transmitting optical signals for the optical modules may refer to that in Fig. 2. A spacing between the central wavelength of the transmitting optical signals for the optical modules and the boundary of the adjacent channels of the WDM multiplexer/demultiplexer is N or (M-N), where M represents the channel spacing of the WDM multiplexer/demultiplexer, and N represents the adjusting and shifting value of the central wavelengths of the transmitting optical signals for the optical modules.

In a possible embodiment of the present disclosure, a laser in the optical module is a DML or an EML.

In some embodiments of the present disclosure, each optical module of the equipment at remote side is deployed in an AAU or an RRU.

It should be appreciated that, the WDM multiplexer/demultiplexer of the equipment at remote side may be arranged at a position different from the optical module. For example, the WDM multiplexer/demultiplexer may be arranged on a tower of a base station and connected to the optical module in the AAU or RRU through an optical fiber.

Further, when the optical module of the equipment at central office has sufficient performance, the optical module of the equipment at remote side may be managed by the optical module of the equipment at central office, and when the optical module of the equipment at central office has insufficient performance, the optical module of the equipment at remote side may be managed by the OTN or WDM equipment where the optical module of the equipment at central office is deployed.

As shown in Figs. 3a and 3b, the description will be given in conjunction with a specific implementation scenario. Fig. 3a shows architecture of the WDM system, and Figs. 3b and 3c show the distribution of the central wavelengths of the transmitting optical signals for the optical modules in the channel for the WDM multiplexer/demultiplexer (WM/D). In the embodiments of the present disclosure, the WDM system is a single-fiber bidirectional system.

In the embodiments of the present disclosure, the central wavelengths of the channels for the WDM multiplexer/demultiplexer have a same spacing, i.e., 10nm. The spacings between central wavelengths of transmitting optical signals for the optical modules located at adjacent wavelength channels are unequal, the spacings between the central wavelengths of the transmitting optical signals for the optical modules located at odd wavelength channels are equal, i.e., 20nm, and spacings between the central wavelengths of the transmitting optical signals for the optical modules located at even wavelength channels are equal, i.e., 20nm. A spacing between the central wavelengths of the transmitting optical signals for the optical modules located at adjacent odd wavelength channel and even wavelength channel is 7nm or 13nm.

The central wavelengths of the transmitting optical signals for the optical modules located at adjacent wavelength channels are symmetrical with a boundary of the adjacent channels of the WDM multiplexer/demultiplexer. Considering that the dispersion penalty is small in the O band and the first 6-wavelength DML in the CWDM is mature and cost-effective, on the basis of the first 6 wavelengths in the CWDM (i.e., 1271nm, 1291nm, 1311nm, 1331nm, 1351nm and 1371nm), the central wavelengths of the optical modules are shifted to the left and right by 3.5nm, so as to obtain a central wavelength of 12 wavelengths with different spacings for the WDM system.

In a possible embodiment of the present disclosure, Table 1 shows the allocation of the central wavelengths, where an index number of the channel is merely for illustrative purposes. In the embodiments of the present disclosure, the 12-wavelength optical module and an implementation mode of the wavelengths will not be particularly defined herein.

**Table 1**

| Index number of channel | Central wavelength (nm) |
|---|---|
| 1 | 1267.5 |
| 2 | 1274.5 |
| 3 | 1287.5 |
| 4 | 1294.5 |
| 5 | 1307.5 |
| 6 | 1314.5 |
| 7 | 1327.5 |
| 8 | 1334.5 |
| 9 | 1347.5 |
| 10 | 1354.5 |
| 11 | 1367.5 |
| 12 | 1374.5 |

In the WDM system in Fig. 3a, the optical module for transmitting the light at the central wavelength of 1267.5nm may match the optical module for transmitting the light at the central wavelength of 1274.5nm. In other words, for the optical module for transmitting the light at the central wavelength of 1267.5nm, it transmits the light at the wavelength of 1267.5nm and receives the light at the wavelength of 1274.5nm, while for the optical module for transmitting the light at the central wavelength of 1274.5nm, it transmits the light at the wavelength of 1274.5nm and receives the light at the wavelength of 1267.5nm. The same may also be applied to the allocation of the central wavelengths of the light transmitted and received by the other optical modules, which will thus not be particularly defined herein.

The above matching mode of the central wavelengths is merely for illustrative purposes, and the specific matching mode of the central wavelengths will not be particularly defined herein.

In the embodiments of the present disclosure, the cost-effective DML of the 25G CWDM for the first 6 wavelengths is shared, and the 12 wavelengths are all implemented by the DML, so it is able to reduce the manufacture cost, and rapidly meet the 12-wavelength 25G requirement through a mature industry chain. The channels of the WDM multiplexer/demultiplexer have a same spacing and the spacing is 10n for easy implementation.

For the 25G DWDM scheme in the related art, the dispersion penalty in the C band is large, the EML is adopted, and it is necessary to control the optical module using a precise TEC. In addition, the 25G DWDM optical module is still in small-batch production. In contrast, in the embodiments of the present disclosure, the same-spacing WDM system is replaced with the different-spacing WDM system, i.e., the WDM system includes the WDM multiplexer/demultiplexer whose wavelength channels have a same spacing, the optical modules whose wavelength channels have different spacings and the optical fiber link. On the basis of the first 6 wavelengths in the CWDM (i.e., 1271nm to 1371nm), the central wavelengths of the optical modules are shifted to the left and right respectively by 3.5nm, so as to obtain a central wavelength of 12 wavelengths with different spacings for the WDM system. The cost-effective DML of the 25G CWDM for the first 6 wavelengths is shared, and the 12 wavelengths are all implemented by the DML, so it is able to reduce the manufacture cost. The channels of the WDM multiplexer/demultiplexer still have a same spacing and the spacing is 10n for easy implementation.

For the 25G CWDM scheme in the related art, the DML is adopted by the optical modules for the first 6 wavelengths, i.e., 1271nm to 1371nm, the EML is adopted by the optical modules for 6 wavelengths, i.e., 1471nm to 1571nm and it is still provided in small batch, and there is currently no 25G CWDM product for the other bands. In contrast, in the embodiments of the present disclosure, the same-spacing WDM system is replaced with the different-spacing WDM system, i.e., the WDM system includes the WDM multiplexer/demultiplexer whose wavelength channels have a same spacing, the optical modules whose wavelength channels have different spacings and the optical fiber link. On the basis of the first 6 wavelengths in the CWDM (i.e., 1271nm to 1371nm), the central wavelengths of the optical modules are shifted to the left and right respectively by 3.5nm, so as to obtain 12 central wavelengths with different spacings for the WDM system. The cost-effective DML of the 25G CWDM for the first 6 wavelengths is shared, and the 12 wavelengths are all implemented by the DML, so it is able to reduce the manufacture cost, and rapidly meet the 12-wavelength 25G requirement through a mature industry chain. The channels of the WDM multiplexer/demultiplexer still have a same spacing and the spacing is 10n for easy implementation.

For the 25G LAN-WDM scheme in the related art, it merely supports 8 wavelengths, and mainly the EML is adopted. The DML for last 4 wavelengths is provided by some manufacturers. In future, the cost-effective elements, e.g., the DML, will be adopted in the case that a link budget has been met. It takes a long time to redesign and verify the evolution from an EML scheme to a DML scheme and extended laser resources for new wavelengths. In contrast, in the embodiments of the present disclosure, the same-spacing WDM system is replaced with the different-spacing WDM system, i.e., the WDM system includes the WDM multiplexer/demultiplexer whose wavelength channels have a same spacing, the optical modules whose wavelength channels have different spacings and the optical fiber link. On the basis of the first 6 wavelengths in the CWDM (i.e., 1271nm to 1371nm), the central wavelengths of the optical modules are shifted to the left and right respectively by 3.5nm, so as to obtain 12 central wavelengths with different spacings for the WDM system. The cost-effective DML of the 25G CWDM for the first 6 wavelengths is shared, and the 12 wavelengths are all implemented by the DML, so it is able to reduce the manufacture cost, and rapidly meet the 12-wavelength 25G requirement through a mature industry chain. The channels of the WDM multiplexer/demultiplexer still have a same spacing and the spacing is 10n for easy implementation.

The above embodiments are for illustrative purposes only, but the present disclosure is not limited thereto. Obviously, a person skilled in the art may make further modifications and improvements without departing from the principle of the present disclosure, and these modifications and improvements shall also fall within the scope of the present disclosure. Therefore, the protection scope of the present application is defined by the attached claims.

## Claims

1. A Wavelength Division Multiplexing, WDM, system, comprising optical modules (11), and a pair of WDM multiplexer/demultiplexer (12), wherein the optical modules (11) are connected to the WDM multiplexer/demultiplexer (12), respectively, and the pair of WDM multiplexer/demultiplexer (12) are connected through an optical fiber link;
spacings between central wavelengths of channels for the WDM multiplexer/demultiplexer (12) are equal;
spacings between central wavelengths of transmitting optical signals for the optical modules (11) located at adjacent wavelength channels are unequal;
spacings between the central wavelengths of the transmitting optical signals for the optical modules (11) located at odd wavelength channels are equal;
spacings between the central wavelengths of the transmitting optical signals for the optical modules (11) located at even wavelength channels are equal,
wherein the central wavelengths of the transmitting optical signals for the optical modules (11) located at adjacent wavelength channels are symmetrical with a boundary of the adjacent channels of the WDM multiplexer/demultiplexer (12),
**characterized in that** the spacing between the central wavelengths of the transmitting optical signals for the optical modules (11) located at the odd wavelength channels is 2M;
the spacing between the central wavelengths of the transmitting optical signals for the optical modules (11) located at the even wavelength channels is 2M;
the spacing between the central wavelengths of the transmitting optical signals for the optical modules (11) located at adjacent odd wavelength channel and even wavelength channel is 2N or 2(M-N),
wherein M represents the channel spacing of the WDM multiplexer/demultiplexer (12), N represents the adjusting and shifting value of the central wavelengths of the transmitting optical signals for the optical modules (11), and M is not equal to N and neither M nor N are 0.

2. The WDM system according to claim 1, wherein the central wavelengths of the optical modules (11) are determined by adjusting and shifting the central wavelengths of the channels for the WDM multiplexer/demultiplexer (12), respectively.

3. The WDM system according to claim 1, wherein the channel bandwidths of each channels for the WDM multiplexer/demultiplexer (12) are less than or equal to M, and the center of the channel bandwidth is located at the same or different point with the center of the channel.

4. The WDM system according to claim 1, wherein a laser in the optical module is a Direct Modulated Laser, DML, or an Electro-absorption Modulated Laser, EML.

5. The WDM system according to claim 1, wherein the optical fiber link is a single-fiber unidirectional optical fiber link or a single-fiber bidirectional optical fiber link.

## Patentansprüche

1. Wellenlängenmultiplex-, WDM-, System, mit optischen Modulen (11) und einem Paar WDM-Multiplexer/Demultiplexer (12), wobei die optischen Module (11) jeweils mit dem WDM-Multiplexer/Demultiplexer (12) verbunden sind und das Paar WDM-Multiplexer/Demultiplexer (12) über eine optische Faserverbindung verbunden ist; bei dem
Abstände zwischen den Mittenwellenlängen der Kanäle für den WDM-Multiplexer/Demultiplexer (12) gleich sind;
Abstände zwischen den Mittenwellenlängen der optischen Sendesignale für die optischen Module (11) an benachbarten Wellenlängenkanälen ungleich sind;
Abstände zwischen den Mittenwellenlängen der optischen Sendesignale für die optischen Module (11) an ungeraden Wellenlängenkanälen gleich sind;
Abstände zwischen den Mittenwellenlängen der optischen Sendesignale für die optischen Module (11) an geraden Wellenlängenkanälen gleich sind,
wobei die Mittenwellenlängen der optischen Sendesignale für die optischen Module (11) an benachbarten Wellenlängenkanälen symmetrisch zu einer Grenze der benachbarten Kanäle des WDM-Multiplexers/Demultiplexers (12) sind,
**dadurch gekennzeichnet, dass** der Abstand zwischen den Mittenwellenlängen der optischen Sendesignale für die optischen Module (11) an den ungeraden Wellenlängenkanälen 2M beträgt;
der Abstand zwischen den Mittenwellenlängen der optischen Sendesignale für die optischen Module (11) an den geraden Wellenlängenkanälen 2M beträgt;
der Abstand zwischen den Mittenwellenlängen der optischen Sendesignale für die optischen Module (11) an benachbarten ungeraden Wellenkanälen und geraden Wellenkanälen 2N oder 2(M-N) beträgt,
wobei M den Kanalabstand des WDM-Multiplexers/Demultiplexers (12) darstellt, N den Einstell- und Verschiebungswert der Mittenwellenlängen der optischen Sendesignale für die optischen Module (11) darstellt, M nicht gleich N ist und weder M noch N 0 sind.

2. WDM-System nach Anspruch 1, bei dem die Mittenwellenlängen der optischen Module (11) durch Einstellen und Verschieben der Mittenwellenlängen der Kanäle für den WDM-Multiplexer/Demultiplexer (12) bestimmt werden.

3. WDM-System nach Anspruch 1, bei dem die Kanalbandbreiten jedes Kanals für den WDM-Multiplexer/Demultiplexer (12) kleiner oder gleich M sind und die Mitte der Kanalbandbreite an demselben oder einem anderen Punkt wie die Mitte des Kanals liegt.

4. WDM-System nach Anspruch 1, bei dem ein Laser in dem optischen Modul ein direkt modulierter Laser (DML) oder ein elektroabsorptionsmodulierter Laser (EML) ist.

5. WDM-System nach Anspruch 1, bei dem die optische Faserverbindung eine unidirektionale optische Einzelfaserverbindung oder eine bidirektionale optische Einzelfaserverbindung ist.

## Revendications

1. Système de multiplexage par répartition en longueur d'onde, WDM, comprenant des modules optiques (11), et une paire de multiplexeurs/démultiplexeurs WDM (12), dans lequel les modules optiques (11) sont connectés aux multiplexeurs/démultiplexeurs WDM (12), respectivement, et la paire de multiplexeurs/démultiplexeurs WDM (12) sont connectés par l'intermédiaire d'une liaison à fibre optique ;
des espacements entre des longueurs d'onde centrales des canaux pour les multiplexeurs/démultiplexeurs WDM (12) sont égaux ;
des espacements entre des longueurs d'onde centrales de signaux optiques de transmission pour les modules optiques (11) situés à des canaux de longueur d'onde adjacents sont inégaux ;
des espacements entre les longueurs d'onde centrales des signaux optiques de transmission pour les modules optiques (11) situés à des canaux de longueur d'onde impaires sont égaux ;
des espacements entre des longueurs d'onde centrales des signaux optiques de transmission pour les modules optiques (11) situés à des canaux de longueur d'onde paires sont égaux,
dans lequel les longueurs d'onde centrales des signaux optiques de transmission pour les modules optiques (11) situés à des canaux de longueur d'onde adjacents sont symétriques par rapport à une limite des canaux adjacents des multiplexeurs/démultiplexeurs WDM (12),
**caractérisé en ce que** l'espacement entre les longueurs d'onde centrales des signaux optiques de transmission pour les modules optiques (11) situés au niveau des canaux de longueur d'onde impaires est de 2M ;
l'espacement entre les longueurs d'onde centrales des signaux optiques de transmission pour les modules optiques (11) situés au niveau des canaux de longueur d'onde paires est de 2M ;
l'espacement entre les longueurs d'onde centrales des signaux optiques de transmission pour les modules optiques (11) situés à des canaux de longueur d'onde impaires et de longueur d'onde paires adjacents est de 2N ou 2(M-N),
dans lequel M représente l'espacement des canaux des multiplexeurs/démultiplexeurs WDM (12), N représente la valeur d'ajustement et de décalage des longueurs d'onde centrales des signaux optiques de transmission pour les modules optiques (11), et M n'est pas égal à N et ni M ni N ne sont égaux à 0.

2. Système WDM selon la revendication 1, dans lequel les longueurs d'onde centrales des modules optiques (11) sont déterminées en ajustant et en décalant les longueurs d'onde centrales des canaux pour les multiplexeurs/démultiplexeurs WDM (12), respectivement.

3. Système WDM selon la revendication 1, dans lequel les largeurs de bande de canal de chaque canal pour le multiplexeur/démultiplexeur WDM (12) sont inférieures ou égales à M, et le centre de la largeur de bande de canal est situé au même point ou à un point différent du centre du canal.

4. Système WDM selon la revendication 1, dans lequel un laser dans le module optique est un laser à modulation directe, DML, ou un laser à modulation par électro-absorption, EML.

5. Système WDM selon la revendication 1, dans lequel la liaison de fibre optique est une liaison de fibre optique unidirectionnelle à fibre unique ou une liaison de fibre optique bidirectionnelle à fibre unique.
